# EUROPÄISCHE PATENTSCHRIFT

(11) **EP 3 926 309 B1**
(45) Veröffentlichungstag und Bekanntmachung des Hinweises auf die Patenterteilung: **06.07.2022**
(21) Anmeldenummer: 20181181.7
(22) Anmeldetag: 19.06.2020
(51) Int. Cl.: G01G 19/393, G01G 23/10, G05B 13/02

(54) **SIGNALVERARBEITUNGSVERFAHREN FÜR MEHRKOPFWAAGEN**
SIGNAL PROCESSING METHOD FOR MULTIHEAD COMBINATION WEIGHERS
PROCÉDÉ DE TRAITEMENT DU SIGNAL POUR PESEUSES MULTI-TÊTES

(43) Veröffentlichungstag der Anmeldung: 22.12.2021
(73) Patentinhaber: MULTIPOND Wägetechnik GmbH, 84478 Waldkraiburg (DE)
(72) Erfinder: PROFE, Felix, 84543 Winhöring (DE); ZECK, Wolfram C., 84453 Mühldorf (DE)
(74) Vertreter: Prüfer & Partner mbB Patentanwälte · Rechtsanwälte

(56) Entgegenhaltungen:
- EP-A1- 1 860 410
- EP-A1- 3 187 840
- JP-B1- 6 656 687

## Beschreibung

Die vorliegende Erfindung beschäftigt sich mit einem Signalverarbeitungsverfahren für Mehrkopfwaagen und einer Vorrichtung zur Signalverarbeitung, wobei bei einem Übergang von einem ersten konstanten Wert (Gewichtssignal bei leerem Wägebehälter einer Mehrkopfwaage) zu einem zweiten konstanten Wert (Gewichtssignal bei gefülltem Wägebehälter einer Mehrkopf- bzw. Kombinationswaage) eine Schätzung für den zweiten konstanten Wert vorgenommen werden soll.

Wenn Produkt in eine Wägeeinrichtung abgeworfen wird (was insbesondere bei Kombinationswaagen im Betrieb der Normalfall ist), entsteht jedesmal ein Aufprallimpuls. Das Gewichtssignal der Wägeeinrichtung erhöht sich dabei theoretisch von Null (als erstem konstanten Wert) auf einen bestimmten Endwert (Gewicht des abgeworfenen Gutes als zweiten konstanten Wert). Jedoch entstehen durch den Aufprallimpuls Schwingungen und ein konstanter Messwert kann daher nicht sofort erhalten werden- vielmehr ist zuerst einmal ein "Überschießen" des Gewichtssignals zu beobachten.

Daher schwankt der Wert des Gewichtssignals, was insbesondere auf das physikalische Verhalten einer Wägeeinrichtung zurückgeführt werden kann. Schwankungen können hervorgerufen werden durch eine nicht konstante Messgröße, also einen Übergang der Messgröße zwischen zwei konstanten Pegeln, sowie einem überlagerten Rauschen der Messanordnung.

Ferner können aber auch den Messwert überlagernde Störgrößen auftreten, beispielsweise eine Beaufschlagung der Messgrößen mit periodischen Störgrößen, Schwingungen, Schwebungen (wie Luftzüge) oder systemfremden Größen. So können bei einer Wägeeinrichtung einer Mehrkopfwaage beispielsweise ein Luftzug, Wind, Schwankungen der Luftfeuchtigkeit und Schwingungen des ganzen Wägesystems eine Rolle spielen. Auch ist es möglich, dass eine Messgröße mit aperiodischen Störgrößen beaufschlagt wird, beispielsweise Auswirkungen von Beschleunigung, Impulsen und elektrostatischen Ladungen, außerdem können weitere Umwelteinflüsse einwirken, wie beispielsweise Wind, Sonneneinstrahlung oder Ähnliches.

Auch kann es vorkommen, dass sich in dem Wägebehälter einer Wägeeinrichtung Produkte auftürmen, und durch eine Instabilität der Produkte innerhalb der Wägeeinrichtung sich die Positionen der Produkte in der Wägeeinrichtung noch ändern - beispielsweise, wenn fünf Spinatwürfel abgeworfen werden und sich alle in der linken Ecke der Wägeeinrichtung auftürmen, kann es passieren, dass sich diese durch Umfallen des "Turms" konstant auf dem Boden der Wägeeinrichtung verteilen, wodurch ein zusätzlicher Impuls entsteht, was die Messung des tatsächlichen Gewichts erheblich stören kann.

Das Vorhandensein solcher Störgrößen führt zu einer ungenauen Messung, insbesondere aber zu einer längeren Messzeit bis zum Erreichen einer bestimmten Genauigkeit des Gewichts. Gerade bei Kombinationswaagen, bei denen laufend Kombinationen von mehreren Wägeeinrichtungen gefunden werden müssen, muss schnell klar sein, welches Produktgewicht in den einzelnen Wägeeinrichtungen vorhanden ist, weswegen die Messzeit hier möglichst kurz sein muss - ansonsten werden der Durchsatz und die Kombinationsfährgkeit einer Mehrkopfwaage erheblich verlangsamt. Nach dem Abwurf einer Produktmenge in einen Wägeeinrichtung ändert sich das Produktgewicht von einem ersten konstanten Wert (in diesem Fall null) zu einem tatsächlichen Produktgewicht (also ein zweiter konstanter Wert). Für diesen muss aber bereits nach kurzer Zeit ein zuverlässiger Schätzwert vorliegen, da es in einer Kombinationswaage zu lange dauern würde, bis für jede Wägeeinrichtung das ganz exakte Produktgewicht bei letztendlich statischem Gleichgewicht ermittelt wird.

Im Stand der Technik sind Filter bekannt, welche den Einfluss von Störgrößen in Messsystemen eliminieren oder reduzieren sollen. Hier können beispielsweise analoge Filter für die Messgröße selbst oder eine physikalische Größe, in welche die Messgröße umgewandelt wurde (beispielsweise ein Elektrosignal) verwendet werden. Auch sind digitale Filter bekannt, welche ein digitalisiertes Messsignal entsprechend verarbeiten. Bei der Verwendung von Filtern wird das ursprüngliche Messsignal allerdings in einer bestimmten Art und Weise verändert - und dabei dürfen Filter die tatsächliche Messgröße im Messbereich nur geringfügig verfälschen. Störgrößen müssen stark unterdrückt werden, und das Verhalten des Messsignals in allen zu erwartenden Situationen (einschließlich Umwelteinflüssen) muss stabil sein. Ferner müssen Messresultate mit einer gewissen, vorgegebenen Genauigkeit erzielt werden können, und Messungen müssen hinreichend schnell ausgeführt werden.

Wie im allgemeinen Stand der Technik üblich, wird die Unterdrückung von Störgrößen bei der Messung von dynamischen Signalen durch Anwendung von sogenannten Tiefpassfiltern vorgenommen. Solche Tiefpassfilter erlauben das Passieren von Anteilen der Messsignale mit niedriger Frequenz, während alle höherfrequenten Anteile entsprechend gedämpft bzw. abgeschwächt werden. Die Anwendung eines solchen Tiefpassfilters führt zu einem von Störgrößen befreiten bzw. gefilterten Messsignal, welches ein Messergebnis mit hinreichender Genauigkeit ermöglicht bzw. überhaupt die Ermittlung eines von Störgrößen befreiten Messergebnisses erlaubt. Tiefpassfilter weisen allerdings den Nachteil auf, dass bei Änderung des Messsignals eine sehr geringe Reaktionsgeschwindigkeit vorhanden ist, und somit sehr lange Einschwingzeiten bis zum Erreichen eines Messsignals mit hinreichender Genauigkeit benötigt werden. Dynamische Messungen verschiedener Messgrößen, welche häufig zwischen unterschiedlichen Werten schwanken, führen bei einem Tiefpassfilter zu einer deutlichen Verzögerung des Messresultats. Das gefilterte Messsignal fällt also weit hinter das eigentlich gemessene Signal zurück.

Im Stand der Technik bekannt ist insbesondere das Dokument EP 2 522 964 B1, welches eine besondere Anordnung von Digitalfiltern beschreibt, wo das Signal zuerst mit einem schwachen Tiefpassfilter von den hochfrequenten Anteilen bereinigt wird, und nach Erreichen einer gewissen Schwankungsbreite mit einem weiteren, starken Tiefpassfilter geglättet wird. Somit kann bei verkürzter Messdauer ein angenähertes Messergebnis erhalten werden.

Dieses Dokument offenbart ein Signalverarbeitungsverfahren zur Ermittlung eines Messwerts bei Messsignalen durch Anwendung eines ersten digitalen Filters und eines zweiten digitalen Filters, wobei nach Erreichen des ersten Stillstandskriteriums ein Filterumstieg auf ein adaptives drittes Filter veranlasst wird und dann nach dem Erreichen eines zweiten Stillstandskriteriums ein endgültiger Messwert ausgegeben wird. Dieses adaptive Filter steigt nach dem Erreichen eines ersten Stillstandskriteriums vom Vorfilter auf das starke Filter um, um eine höhere Stabilität gegenüber dem noch nicht abgeklungenen Einschwingvorgang zu erreichen.

Weiterhin ist es im Stand der Technik allgemein bekannt, dass zur Unterdrückung von Störgrößen die Bildung eines Mittelwerts aus mehreren aufeinanderfolgenden Messwerten erfolgt. So können sich Schwankungen der einzelnen Werte nicht mehr unmittelbar auf das Messergebnis auswirken, was das Filtersignal ruhiger werden lässt. Da hier ein mitlaufender Mittelwert über einige Messungen gebildet wird, kann dieses Verfahren auf kontinuierliche Messdaten angewendet werden, und es werden dadurch alle Störgrößen abgeschwächt und bestimmte periodische Störgrößen können sogar gänzlich unterdrückt werden. Voraussetzung hierfür ist eine hinreichend hohe Messfrequenz.

Eine weitere Methode zur Unterdrückung von Störungen ist die Verwendung von Digitalfiltern. Diese können weiterhin rekursiv, mit Rückkopplung oder nicht rekursiv, ohne Rückkopplung sein. Eine andere Klassifizierung unterscheidet zwischen Filtern mit Finite Impulse Response (FIR) und Filtern mit Infinite Impulse Response (IIR). Bei Digitalfiltern kommen weiterhin sehr häufig Butterworth-, Bessel-, Tschebyscheff- oder Cauer-Filter zum Einsatz.

Die Filter im Stand der Technik haben Vorteile unter gegebenen Anwendungsbedingungen. Allerdings ist je nach Anwendungsfall die Reaktionsschnelligkeit oder die Toleranz gegenüber unterschiedlich größeren Störungen nicht ausreichend, und bei solchen Randbedingungen kann mit einer solchen Anordnung die Messdauer nicht hinreichend genug verkürzt werden.

Es ist daher eine Aufgabe der vorliegenden Erfindung, die Signalverarbeitung von Messwerten beim Übergang des gemessenen Wertes von einem ersten konstanten Wert zu einem zweiten konstanten Wert so zu ändern, dass eine schnelle Reaktion auf etwaige Änderungen des Eingangssignals erfolgt, die Zeit bis zum Vorliegen eines hinreichend vertrauenswürdigen Messresultats verkürzt werden kann und die Stabilität des Messergebnisses nach der Ersterfassung vergrößert werden kann.

Ferner sollen verschiedene Methoden zur Stabilitätsbeurteilung vorgegeben werden können, und hinreichend genaue Messergebnisse sollen auch beim Vorhandensein von größeren Störeinflüssen zustande kommen können.

Diese Aufgabe wird gelöst von einem Signalverarbeitungsverfahren nach Anspruch 1 sowie einer Kombinationswaage gemäß Anspruch 15. Weitere vorteilhafte Ausgestaltungen sind Gegenstand der abhängigen Ansprüche.

Eine erste Ausführungsform des erfindungsgemäßen Signalverarbeitungsverfahrens umfasst die folgenden Schritte:
a) wiederholtes Abtasten eines Meßsignals zwischen einem ersten konstanten Wert (also das tatsächliche Gewichtssignal einer leeren Wägeeinrichtung) und einem zweiten konstanten Wert (also das tatsächliche Gewichtssignal einer vollen Wägeeinrichtung) innerhalb einer vorgegebenen Zeitspanne mit einer Datenrate, wobei i diskrete Werte erhalten werden;
b) Vorverarbeitung des Meßsignals, Ermitteln und Ausgabe von resultierenden Kenngrößen,
c) Liefern von mindestens zwei, maximal p resultierenden Kenngrößen an jeweilige Eingänge mindestens eines künstlichen neuronalen Netzwerks als Eingangswerte, Verarbeiten der Eingangswerte in mindestens einer Hidden Layer,
d) Ausgabe von q Ausgangswerten aus einer Ausgangslayer, wobei ein Ausgangswert der Schätzwert für den zweiten konstanten Wert ist, wobei die Eingangslayer, die mindestens eine Hidden Layer und die Ausgangslayer eine unterschiedlichen Anzahl von Neuronen aufweisen können, welche über gewichtete Verknüpfungen mit den Neuronen der jeweiligen vor- und/oder nachfolgenden Layer verbunden sind,

Der Begriff Wägeeinrichtung umfasst den Wägebehälter selbst und eine geeignete Vorrichtung, die dessen Gewicht wiedergibt und somit das Gewichtssignal des Behälters ermittelt.

Dabei kann ein Schätzwert für den zweiten konstanten Wert des Gewichtssignals früher als bei den im Stand der Technik bekannten Verfahren, einen genügend genauen und stabilen Wert bringen - somit kann bei einer Mehrkopfwaage früher eine hinreichend genaue Schätzung für ein Gewichtssignal einer Wägeeinrichtung ermittelt werden - und somit kann die Wägeeinrichtung früher für eine Kombinationsbildung herangezogen werden, und das gewogene Produkt kann früher abgeworfen werden, wodurch die Wägeeinrichtung früher für eine neue Beschickung zur Verfügung steht. Dies ermöglicht einen höheren Produktdurchsatz der Mehrkopfwaage.

Ferner kann ein schnelleres Einschwingen des Schätzwertes unter normalen Bedingungen, d.h. ohne besondere Störeinwirkungen, realisiert werden.

Ferner besitzt das Verfahren gegenüber dem Stand der Technik eine höhere Immunität gegenüber aperiodischen und periodischen Störungen.

Weiterhin sind ein Messen eines Gewichtssignals unter schwierigen Bedingungen, eine Unterdrückung von Störfrequenzen, und eine lernfähige Korrekturfunktion für dynamisches Messen möglich.

Vorzugsweise sind die resultierenden Kenngrößen in Schritt b) ausgewählt aus Maxima und Minima des Gewichtssignals und den dazugehörigen Zeitpunkten, die vom Signalverlauf abgedeckten Flächen zu bestimmten Zeitpunkten, Steigungen oder Krümmungen zu bestimmten Zeitpunkten, sowie Temperatur, Druck, Luftfeuchtigkeit, Uhrzeit, Sonneneinstrahlung, EMV-Kenngrößen sowie Kenngrößen zu Produkteigenschaften wie Dichte, Hafteigenschaften und Feuchtegrad. Vorverarbeitete Werte können besser als die rohen Meßwerte charakteristische Merkmale des Signals für die weitere Verarbeitung wiedergeben.

Weiter vorzugsweise wird in Schritt d) die Prognosegenauigkeit als ein weiterer Ausgangswert aus dem künstlichen neuronalen Netzwerk ausgegeben.

Das zu erwartende Vertrauen zu der Genauigkeit von Schätzwerten wird durch die Prognosegenauigkeit angegeben und soll in die Entscheidung zur Verwendung des entsprechenden Schätzwerts einfließen. So kann ein Stillstandskriterium in Abhängigkeit von der Prognosegenauigkeit angepasst werden und zu einer dem möglichen Fehler entsprechenden Werterfassungszeit führen. Ein Stillstandskriterium definiert hier, ab welchem Zeitpunkt der Schätzwert als gültiger Gewichtswert angesehen werden darf (also sich nah genug an den realen Wert angenähert hat), und der Inhalt einer Wägeeinrichtung für Kombinationsfindungen der Mehrkopfwaage verwendet werden kann. Je höher die Anforderungen an das Stillstandskriteirum sind (d.h. je genauer der Schätzwert sein muss und somit je näher der Schätzwert am tatsächlichen Gewichtswert der Wägeeinrichtung liegen soll), desto länger muss das Gewichtssignal beobachtet werden und desto länger müssen diskrete Werte des Gewichtssignal für die Berechnung des Schätzwerts herangezogen werden (d.h. desto mehr diskrete Werte müssen für die Berechnung berechnet werden).

Vorzugsweise weist das Signalverarbeitungsverfahren weiterhin die Schritte d1) und d2) auf:
d1) Prüfen, ob die Prognosegenauigkeit innerhalb eines vorbestimmten Wertebereiches liegt und ein Stillstandskriterium (SSK) erreicht ist;
d2) wenn die Prognosegenauigkeit innerhalb eines vorbestimmten Wertebereiches liegt, Übernehmen des Schätzwerts als zweiten konstanten Wert für das Gewichtssignal; wenn die Prognosegenauigkeit nicht innerhalb des vorbestimmten Wertebereichs liegt, Verabeitung weiterer Gewichtswerte bis zum Erreichen eines gültigen Wertes oder Anpassung des Stillstandskriteriums (SSK) und Wiederholen der Schritte a) bis d1).

Diese Prognosegenauigkeit fließt in die Entscheidung ein, ob der Schätzwert verwendet werden soll.

Die Prognosegenauigkeit kann verschieden definiert sein:
a) Als Wahrscheinlichkeit, dass die Schätzung richtig liegt (Prognosegenauigkeit PG∈ (0,1)) wobei bei genauer Schätzung die Prognosegenauigkeit den Wert eins annimmt;
b) Als wahrscheinlicher Fehler der Schätzung durch Subtraktion des zweiten konstanten Wertes WK2 vom Schätzwert SW (dSW=SW-tatsächlich erfasster Wert).

In diesem Fall ist die Prognosegenauigkeit vorzeichenbehaftet (PG∈ (-1,1)), wobei das Vorzeichen die Abweichungsrichtung angibt und bei genauer Schätzung der Wert null angenommen wird (PG=0); hier können beispielsweise diverse Funktionen f zum Einsatz kommen, welche den Fehler in den Wertebereich [-1; 1] abbilden wie sigmoid, tanh, relu,,, PG=f(dSW)

Dadurch wird es ermöglicht, dass der Schätzwert früher als die dem Stand der Technik entsprechenden Verfahren einen genügend genauen und stabilen Wert darstellt. Das zu erwartende Vertrauen zu der Genauigkeit des Schätzwerts wird durch die Prognosegenauigkeit PG angegeben und soll in die Entscheidung zur Verwendung des Schätzwerts einfließen. So kann das Stillstandskriterium SSK (also das Kriterium, das erfüllt sein muss, wenn ein Schätzwert SW angenommen wird und der SW zur weiteren Verwendung freigegeben wird - ohne auf den tatsächlichen Gewichtswert zu warten), in Abhängigkeit der Prognosegenauigkeit PG angepasst werden und zu einer dem möglichen Fehler entsprechenden Werterfassungszeit WEZ führen.

Welcher der optimale Zeitpunkt ist, an welchem das künstliche neuronale Netzwerk berechnet wird, kann von verschiedenen Faktoren abhängen, wie z.B.

Produkteigenschaften. In anderen Worten: Es kann beispielsweise von Produkteigenschaften abhängen, wie viele vorverarbeitete Gewichtssignale verwendet werden müssen, bis mit Hilfe des künstlichen neuronalen Netzwerks ein Schätzwert berechnet werden kann. Dafür wird dann das künstliche neuronale Netzwerk trainiert und liefert danach, bei laufenden neuen Messungen, zu den entsprechenden Zeitpunkten einen Schätzwert für das Gewichtssignal und eine Prognosegenauigkeit.

Möglich wäre auch, dass verschiedene künstliche neuronale Netzwerke (mit verschiedenen Neuronen sowie gewichteten Verknüpfungen) zur Auswahl stehen und, je nach dem Wert oder Verlauf der Eingänge, das künstliche neuronale Netzwerk selbst entscheidet, welches zum Einsatz kommt.

Bei einer zweiten Ausführungsform kommen i künstliche neuronale Netzwerke hintereinander zum Einsatz, wobei i größer als 1 ist. Dann umfasst das Verfahren die folgenden weiteren Schritte:
e) Einlesen von p resultierenden Kenngrößen sowie von q Ausgangswerten des jeweiligen vorherigen künstlichen neuronalen Netzwerks, wobei ein Ausgangswert der Schätzwert für den zweiten konstanten Wert ist und ein weiterer Ausgangswert die Prognosegenauigkeit des jeweiligen vorherigen künstlichen neuronalen Netzwerks ist, als neue Eingangswerte in ein weiteres künstliches neuronales Netzwerk;
f) Berechnen von Ausgangswerten des aktuellen künstlichen neuronalen Netzwerks, wobei ein Ausgangswert der Schätzwert für den zweiten konstanten Wert ist und ein weiterer Ausgangswert die Prognosegenauigkeit des aktuellen künstlichen neuronalen Netzwerks ist;
g) Wiederholen der Schritte e) und f), bis i künstliche neuronale Netzwerke berechnet wurden;
h) Ausgabe der finalen Ausgangswerte, wobei mindestens ein finaler Schätzwert sowie eine finale Prognosegenauigkeit ausgegeben werden.

Dabei benutzen die späteren künstlichen neuronalen Netzwerke unter anderem auch die Ausgänge des vorhergehenden künstlichen neuronalen Netzwerks, optional auch weiterer vorhergehender künstlicher neuronaler Netzwerke usw. Das zu erwartende Vertrauen zu der Genauigkeit der Prognosegenauigkeit kann hier anhand des Schätzwerts der Vorgängerstufe besser trainiert werden und die Güte der Prognose besser widerspiegeln.

Weiter vorzugsweise erfolgt die Entscheidung zur Verwendung des Schätzwerts als finales Gewichtssignal in Abhängigkeit der Tendenz (Konvergenz, Divergenz, Streuband...) der aufeinanderfolgenden Schätzwerte, welche die einzelnen neuronalen Netzwerke ausgeben, oder in Abhängigkeit der Prognosegenauigkeiten der einzelnen neuronalen Netzwerke oder einer Kombination aus beiden.

Dies erlaubt das schnelle Erreichen eines finalen Gewichtssignals.

In einer dritten Ausführungsform werden Ausgangswerte, als Schätzwerte mindestens eines künstlichen neuronalen Netzwerks an ein Digitalfilter geliefert, in welches das aktuelle Gewichtssignal als Eingang gegeben wird und welches das zeitliche Geschehen des Gewichtssignals verfolgt. Auch bei anfänglich leicht falschen Schätzwerten, wird dann dieser durch das Digitalfilter mit den echten Eingangswerten zu dem richtigen Wert hin korrigiert werden.

Mit dieser Kombination wird sichergestellt, dass frühzeitig ein guter Schätzwert erreicht werden kann. Das Digitalfilter bekommt reale Werte geliefert, aber in dieser Ausführungsform eben zusätzlich sehr früh einen Schätzwert.

Bei einer vierten Ausführungsform der Signalverarbeitung wird eines der vorher genannten Verfahren angewendet, jedoch wird der Verlauf des Signals auf die beinhalteten Frequenzen hin untersucht, z.B. mittels Fourier-Analyse. Dabei werden die Perioden der niederfrequenten Signalanteile (z.B. f₁, f₂)..berechnet und ein Mittelwert über eine gesamte Periode der niedrigsten berechnet. Dabei wird der Einfluss dieser Frequenz f₁ bei gleich bleibender Amplitude, vollständig eliminiert. Wenn der Einfluss der ersten beiden niedrigen Frequenzen eliminiert werden soll, muss über eine Zeit gemittelt werden, die dem kleinsten gemeinsamen Vielfachen der ersten beiden Perioden entspricht. Dabei wird der Einfluss der Frequenzen f₁ und f₂, bei gleichbleibender Amplitude, vollständig eliminiert.

Wenn die Signalanteile gedämpft abklingen, wird der Mittelwert einen Restanteil beinhalten, welcher das Abklingen der Amplitude wiederspiegelt. Bei bekanntem Dämpfungsfaktor, kann dann die Mittelwertbildung das Abklingen der Amplituden entsprechend berücksichtigen und so eine vollständige Tilgung des Einflusses der Signalanteile erreichen.

Der Dämpfungsfaktor kann entweder aus dem Signalverlauf selber berechnet werden oder er ist systemspezifisch und bekannt.

In einer fünften Ausführungsform wird eine Vorverarbeitung des Gewichtssignals in Schritt b) mithilfe einer Fourier-Analyse des Gewichtssignals durchgeführt. Dabei werden mindestens eine Störfrequenz sowie deren momentane Amplitude bzw. Amplituden sowie deren Phasenlage(n) ermittelt, und daraus wird ein gegenphasiges Kompensationssignal ermittelt, welches zu dem Gewichtssignal addiert wird, um ein korrigiertes Gewichtssignal zu erhalten. Weiter vorzugsweise wird laufend eine Dämpfung aus dem Gewichtssignal ermittelt, um die Amplituden der Kompensationssignale zu korrigieren.

Aus dem korrigierten Gewichtssignal werden die resultierenden Kenngrößen ermittelt, mit welchen das mindestens eine künstliche neuronale Netzwerk in Schritt c) arbeitet.

Eine "Befreiung" des Gewichtssignals von einer oder mehreren Signalanteilen von Störfrequenzen kann auch durch eine Zerlegung des Gewichtssignals in einzelne Frequenzanteile durch Fourier-Transformation, Löschen der den Störfrequenzen entsprechenden Anteile und Rücktransformation in den Zeitbereich erfolgen.

So wird das Gewichtssignal praktisch von den dynamischen Anteilen befreit und damit wesentlich ruhiger. Das Stillstandskriterium kann früher als beim eigentlichen unkorrigierten Gewichtssignal einen gültigen Wert erreichen. Die Zeit der Werteerfassung wird kürzer und führt bei einer Kombinationswaage zu höheren Leistungen und zu besseren Kombinationsmöglichkeiten wegen einer größeren Anzahl für die Berechnung einer Kombination zur Verfügung stehender Wägeeinrichtungen.

In einer sechsten Ausführungsform wird die Differenz eines Schätzwertes SW und des Gewichtssignals W ermittelt, daraus wird ein Korrekturfaktor über die Zeit ermittelt, und dieser in folgenden Messungen vom Gewichtssignal W abgezogen, um ein korrigiertes Gewichtssignal zu erhalten, wobei aus dem korrigierten Gewichtssignal die resultierenden Kenngrößen ermittelt werden und in Schritt c) verwendet werden. Daraus kann noch schneller ein genauer Schätzwert berechnet werden.

Weiter vorzugsweise werden etwaige Störfrequenzen durch einen Sensor, gesondert von der tatsächlichen Messgröße ermittelt.

Vorzugsweise wird zur noch genaueren Berechnung des zweiten konstanten Wertes die Differenz des Schätzwertes und des Gewichtssignals ermittelt, daraus wird ein Korrekturfaktor über die Zeit ermittelt, und dieser wird in folgenden Messungen vom Gewichtssignal W abgezogen, um ein korrigiertes Gewichtssignal zu erhalten und einen Erfassungsfehler zu kompensieren.

Diese Korrektur dient zur Ermittlung eines noch genaueren Wertes nach der Ermittlung des Schätzwerts. Somit kann sichergestellt werden, dass, auch wenn ein gültiges Signal ermittelt ist, ein noch genauerer Gewichtswert bestimmt werden kann. In einer Kombinationswaage kann somit eine Wägevorrichtung einen gültigen Wert aufweisen - aber wenn diese Wägevorrichtung noch nicht zur Kombinationsfindung benötigt wird, kann durch den Zeitgewinn ein noch genaueres Gewichtssignal bestimmt werden.

Weiter vorzugsweise kann der Korrekturfaktor aus einem vom Messvorgang unabhängigen, festgelegten Größenverlauf berechnet werden - beispielweise aus einer vorherigen Messung mit ähnlichen zu wiegenden Produkten.

So können vorher ermittelte Messwerte für nachfolgende Messungen genutzt werden, was zu einer schnelleren und genaueren Werterfassung führen kann.

Vorzugsweise werden verschiedene Varianten der Signalverarbeitungsverfahren parallel berechnet, und deren Resultate werden durch eine geeignete Methode der Mittelwertbildung in einen Mittelwert des Schätzwerts zusammengeführt- somit wird die Genauigkeit des Schätzwerts weiter verbessert.

Vorzugsweise werden für das Stillstandskriterium für das Gewichtssignal zwei aufeinanderfolgende Gewichtswerte, Ausgangswerte des künstlichen neuronalen Netzwerks oder des Digitalfilters, verglichen, und wenn deren Differenz kleiner ist als ein vorgegebener Wert, wird ein Zähler inkrementell erhöht, und wenn deren Differenz größer ist als ein vorgegebener Wert, wird ein Zähler inkrementell verringert, und wenn der Zähler eine bestimmte Vorgabe (also einen bestimmten Wert - beispielsweise 10) erreicht, gilt das Stillstandskriterium als erfüllt. Dann können der Gewichtswert, Ausgangswerte des künstlichen neuronalen Netzwerks oder des Digitalfilters für weitere die Verarbeitung, beispielsweise zur Bildung einer Kombination, verwendet werden..

Durch Vorgabe eines Werte für die Differenz zweier aufeinanderfolgender resultierender Gewichtswerte, sowie des vorzugebenden Werts für den Zähler, bei welchem das Stillstandskriterium als erfüllt gilt, lassen sich Genauigkeiten des Schätzwerts für ein Gewichtssignal individuell vorgeben - beispielsweise auch produktabhängig, gerätespezifisch, etc.

Weiter vorzugsweise erfolgt das Hochzählen des Zählers mit einem vorgegebenen Inkrement und das Herunterzählen mit einen vorgegebenen Dekrement - diese können unterschiedlich gewählt werden, je nach Genauigkeitsanforderungen.

Alternativ werden für das Stillstandskriterium für das Gewichtssignal zwei aufeinanderfolgende Gewichtswerte verglichen, und wenn deren Differenz kleiner ist als ein vorgegebener Wert, wird ein Zähler inkrementell erhöht, und wenn deren Differenz größer ist als ein vorgegebener Wert, wird der Zähler auf den Wert null gesetzt, und wenn der Zähler eine bestimmte Vorgabe (also einen bestimmten Wert - beispielsweise 10) erreicht, gilt das Stillstandskriterium als erfüllt.

Dadurch können Ungenauigkeiten noch besser vermieden werden, da bei gravierenden Abweichungen zwischen den Gewichtssignalen von zwei aufeinanderfolgenden Gewichtswerten sichergestellt wird, dass eine gewisse Anzahl an weiteren resultierenden Gewichtswerten aufgezeichnet und für die Auswertung berücksichtigt werden

Eine erfindungsgemäße Kombinationswaage weist auf:
einen Verteilteller sowie mehrere Dosierrinnen, welche jeweils mit einem Antrieb versehen sind,
sowie mindestens eine Wägeeinrichtung sowie optional Vorratsbehälter, welche(r) jeweils unter dem Ende einer Dosierrinne angeordnet sind,
sowie einen Sammeltrichter, der dazu angepasst ist, Produkte aus den Wägeeinrichtungen aufzunehmen,
wobei die Wägeeinrichtungen dazu angepasst sind, ein Gewichtssignal über die Zeit aufzunehmen und auszugeben,
wobei die Kombinationswaage eine Steuerungsvorrichtung aufweist, die dazu angepasst ist, für mindestens eine Wägeeinrichtung ein erfindungsgemäßes Signalverarbeitungsverfahren auszuführen, um Schätzwerte für das Gewichtssignal der Wägeeinrichtung(en) zu ermitteln, daraus Kombinationen zu ermitteln und den Abwurf von Produkt aus der/den Wägeeinrichtung (en) zu steuern.

Somit muss nicht abgewartet werden, bis ein genaues Gewichtssignal eines oder mehrerer Wägeeinrichtung (en) vorliegt - es kann das Schätzsignal verwendet werden, welches den tatsächlichen zweiten konstanten Wert des Gewichtssignals hinreichend genau voraussagt.

Somit können einzelne Wägeeinrichtungen früher für Kombinationsfindungen verwendet werden, der Durchsatz der Kombinationswaage steigt, und Störgrößen können herausgefiltert werden. Daher nimmt auch der Fehler der Gewichtssignale einzelner Wägeeinrichtungen ab.

Im Folgenden werden ausgewählte Ausführungsformen der vorliegenden Erfindung anhand der nachfolgend beschriebenen Figuren genauer erläutert.
- Fig. 1: zeigt die Abtastung eines Messsignals (beispielsweise das Gewichtssignal einer Wägeeinrichtung einer Kombinationswaage) über die Zeit aufgetragen.
- Fig. 2: zeigt die Vorverarbeitung des Messsignals gemäß einer ersten Ausführungsform der vorliegenden Erfindung. In Fig. 2 a) werden Extremwerte (d.h. lokale Minima und Maxima) ermittelt, und in Fig. 2 b) ist gezeigt, dass abgedeckte Flächen bis zu lokalen Minima und Maxima ermittelt werden, und in Fig. 2c) ist die Vorverarbeitung des Messsignals durch Berechnung von Steigungen und Krümmungen zu festgelegten Zeitpunkten dargestellt.
- Fig. 3: zeigt die Struktur eines künstlichen neuralen Netzwerks gemäß einer ersten Ausführungsform der vorliegenden Erfindung.
- Fig. 4: zeigt die Werteerfassung mit Hilfe des künstlichen neuralen Netzwerks gemäß einer ersten Ausführungsform der vorliegenden Erfindung.
- Fig. 5: zeigt eine Hintereinanderschaltung mehrerer künstlicher neuraler Netzwerke und die Verarbeitung eines Messwerts gemäß einer zweiten Ausführungsform der vorliegenden Erfindung.
- Fig. 6: zeigt eine dritte Ausführungsform der vorliegenden Erfindung, wobei hier nach einer Datenverarbeitung durch ein künstliches neuronales Netzwerk der Umstieg auf ein Digitalfilter erfolgt.
- Fig. 7: zeigt eine Datenverarbeitung bzw. Messwertverarbeitung gemäß einer vierten Ausführungsform der vorliegenden Erfindung, hier wird über ganze Perioden ein Mittelwert aufgenommen.
- Fig. 8: zeigt eine fünfte Ausführungsform der vorliegenden Erfindung bei der Störfrequenzen durch ein gegenphasiges Kompensationssignal beseitigt werden
- Fig.9: zeigt eine sechste Ausführungsform der vorliegenden Erfindung, hier ist dargestellt, wie ein entsprechender Erfassungsfehler korrigiert wird.
- Fig. 10: zeigt einen Ausschnitt einer Mehrkopfwaage mit einem angeschlossenen Signalverarbeitungssystem gemäß einer der Ausführungsformen der vorliegenden Erfindung.

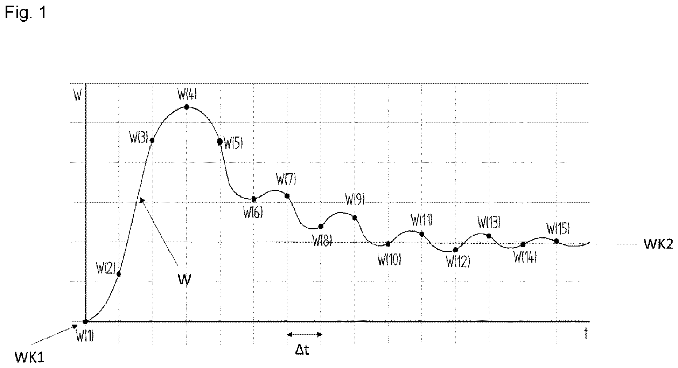

In Fig. 1 zeigt ein typisches Messsignal über die Zeit t- beispielsweise das Gewichtssignal W einer Wägezelle einer Mehrkopfwaage. Hier werden zu bestimmten Zeitpunkten diskrete Werte W(i) ausgelesen. Der Zeitpunkt 0 beschreibt hierbei den Zeitpunkt, bei welchem ein zu wiegendes Produkt in die Wägezelle der Mehrkopfwaage eingeworfen wird. Der erste konstante Wert WK1 war der Nullwert, da vor Abwurf des Produkts kein Gewicht in der Wägezelle angezeigt wurde.

Das Gewichtssignal W nimmt stetig zu und erreicht ein Maximum W(4) (auch wegen des Aufprallimpulses), während es dann wieder über die Zeit abnimmt, wobei das Gewichtssignal dann einigen Schwankungen mit lokalen Minima und Maxima unterworfen ist. In Fig. 1 werden 15 Messwerte des Gewichts W(1)-W(15) gezeigt. Der erste Messpunkt W(1) ist wie gesagt bei 0, dann schnellt er in die Höhe bevor ein erstes lokales Maximum bei W(4) erreicht, dann nimmt er weiter ab, bis er ein nächstes lokales Minimum bei W(6) erreicht, und dann wechseln sich Maxima mit entsprechenden Minima ab. Im ersten Bereich, also zwischen W(4) und W(7), ist der Abstand zweier benachbarter Extrema, in diesem Fall Maxima, relativ groß, während dieser im weiteren Verlauf abnimmt: Beispielsweise ist der Abstand der beiden Maxima nahe W(13) und W(15) entsprechend kleiner.

Der Messwert für das Gewichtssignal W bewegt sich mit zunehmender Zeit t hin zu einem zweiten konstanten Wert WK2.

Im Beispiel der Fig. 1 wird also die Abtastung anhand vorgegebener Zeitschritte Δt vorgenommen. Unabhängig davon, wie sich das Signal verhält, wird immer nach einer gewissen Zeitspanne Δt ein neuer Messwert W(i) aufgenommen, das heißt, dass das Messsignal entsprechend abgetastet wird. Die entsprechende Inverse der Zeitdifferenz Δt ist hier die Datenrate DR (in Fig .1 nicht gezeigt). Je höher die Datenrate DR ist (je geringer die Zeitspanne Δt ist), desto genauer wird das Gewichtssignal W entsprechend wiedergegeben.

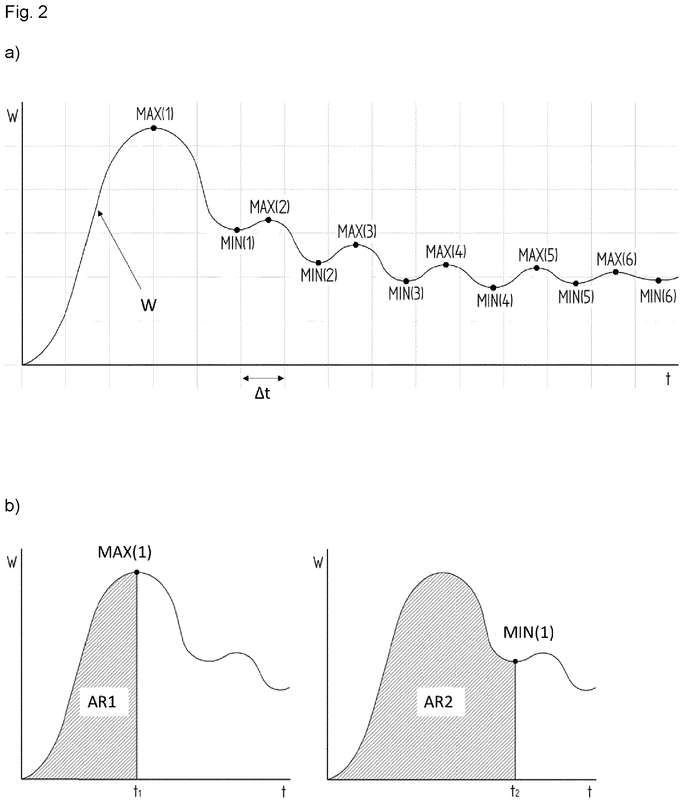

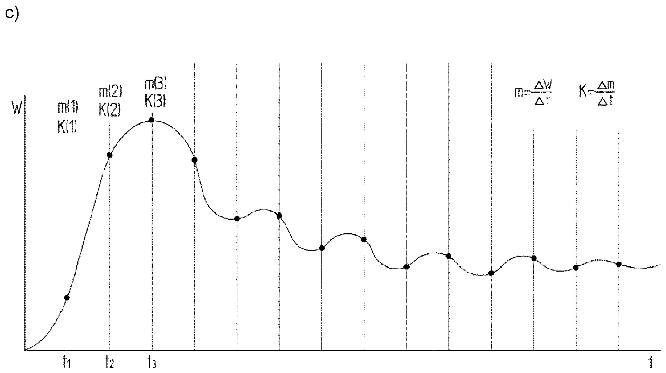

In Fig. 2 ist generell eine Vorverarbeitung der Werte des Messsignals und Ermittlung signifikanter Kenngrößen gezeigt.

In Fig. 2 a) ist gezeigt, dass unabhängig von der Zeitspanne Δt jeweils die lokalen Maxima MAX(1), MAX(2), MAX(3), MAX(4), MAX(5) und MAX(6), also diskrete Punkte, aufgenommen werden, und entsprechend auch die lokalen Minima MIN(1), MIN(2), MIN(3), MIN(4), MIN(5) und MIN(6). Lokale Maxima und lokale Minima wechseln sich ab - der Abstand zwischen zwei benachbarten Maxima bzw. Minima wird mit der Zeit kleiner.

Fig. 2 b) zeigt ein weiteres Beispiel für eine Vorverarbeitung der Daten des Messsignals. Hier werden die vom Signalverlauf abgedeckten Flächen AR1 und AR2 bei entsprechend dem ersten lokalen Maximum MAX(1) sowie dem ersten lokalen Minimum MIN(1) aufgenommen.

Fig. 2 c) zeigt ein drittes Beispiel der Vorverarbeitung. Hier werden zu festgelegten Zeitpunkten t₁, t₂, t₃ ... die Steigungen m(i) bzw. Krümmungen K(i) aufgezeichnet. Steigungen m(i) ergeben sich aus dem Quotienten der Differenz zweier Gewichtssignale W(i+1) und W(i) durch die Differenz beider Zeiten tᵢ₊₁ und tᵢ. Krümmungen K(i) ergeben sich aus der Differenz zweier Steigungen m(i+1) und m(i) durch die Differenz beider Zeiten tᵢ₊₁ und tᵢ.

Vorverarbeitete Werte, wie sie in den Fig. 2 a) -2 c) gezeigt sind, können charakteristische Merkmale des Signals besser wiedergeben als lediglich abgetastete diskrete Werte W(i) wie in Fig. 1.

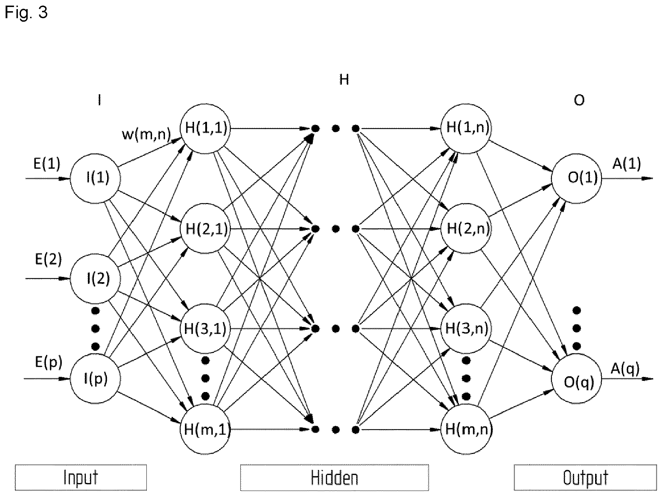

Fig. 3 zeigt die Struktur und den Aufbau des künstlichen neuronalen Netzwerkes, welches zur Messwert- und Signalverarbeitung gemäß der ersten Ausführungsform der vorliegenden Erfindung verwendet wird. Im Beispiel der Fig. 3 ist hier eine Eingangs-Layer I mit mehreren Knoten I(1), I(2).... I(p) dargestellt. In die Eingangs-Layer I werden p Eingangssignale eingelesen, beispielsweise die Kenngrößen, welche aus einer Vorverarbeitung des Messsignals entnommen werden, also beispielsweise p Maxima/Minima des Messsignals gemäß Fig. 2a. Die Hidden Layer H bestehen aus einer unterschiedlichen Anzahl von Neuronen der Hidden-Layer H(m,n). Im vorliegenden Beispiel sind jeweils zwei Spalten und vier Reihen von Neuronen der Hidden-Layer H(m,n) dargestellt, durch Punkte ist allerdings angedeutet, dass diese Zahl sich entsprechend noch erweitern kann.

Ferner sind mehrere Neuronen der Ausgangs-Layer O mit mehreren Knoten I(1), .... I(q) dargestellt.

Die Ausgangswerte der Ausgangs-Layer O sind A(1) ...A(q).

Dies können beispielsweise der frühzeitig geschätzte Wert SW des zweiten konstanten Werts WK2 und eine Prognosegüte PG sein, aber auch andere für das System charakteristische Größen.

Das künstliche neuronale Netzwerk kann also in jedem Layer aus einer unterschiedlichen Anzahl von Neuronen I(p), H(m,n) sowie O(q) bestehen, diese sind jeweils mit gewichteten Verknüpfungen w(m,n) mit den entsprechenden Neuronen derselben bzw. vor- / nachfolgenden Layer verbunden. Eine solche gewichtete Verknüpfung ist beispielhaft zwischen einem Neuron der Eingangs-Layer I(1) sowie einem Neuron der Hidden-Layer H(1,1) durch einen Pfeil angezeigt, die gewichtete Verknüpfung ist hier mit w(m,n) benannt. Die gewichteten Verknüpfungen w(m,n) werden während der Trainingsphase des künstlichen neuronalen Netzwerks ständig neu berechnet und entsprechend angepasst.

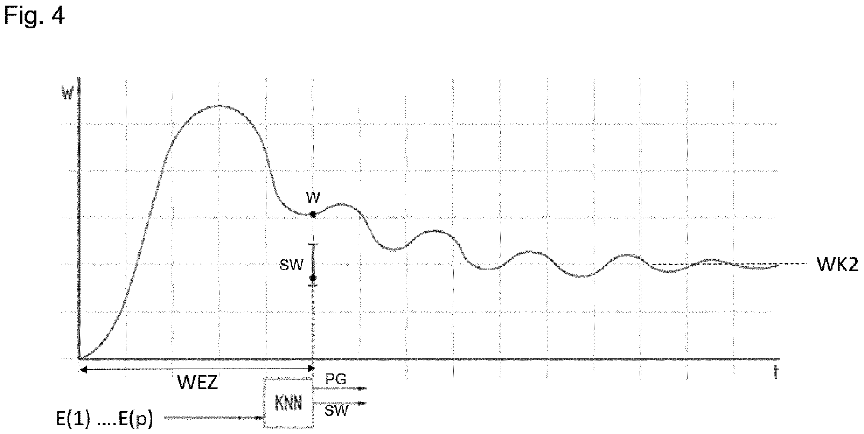

Fig. 4 zeigt die Werteerfassung mit Hilfe eines einstufigen künstlichen neuralen Netzwerks KNN gemäß der ersten Ausführungsform der vorliegenden Erfindung. Hier wird gezeigt, wie p Werte E(1)....E(p) dem künstlichen neuralen Netzwerk zugeführt werden, und im vorliegenden Beispiel zwei Werte ausgegeben werden, nämlich die Prognosegüte PG sowie ein Schätzwert SW für den zweiten konstanten Wert WK2. Der Schätzwert SW soll dabei einen genügend genauen stabilen Wert anzeigen. Das zu erwartende Vertrauen zu der Genauigkeit des Schätzwertes SW wird von der Prognosegenauigkeit PG angegeben.

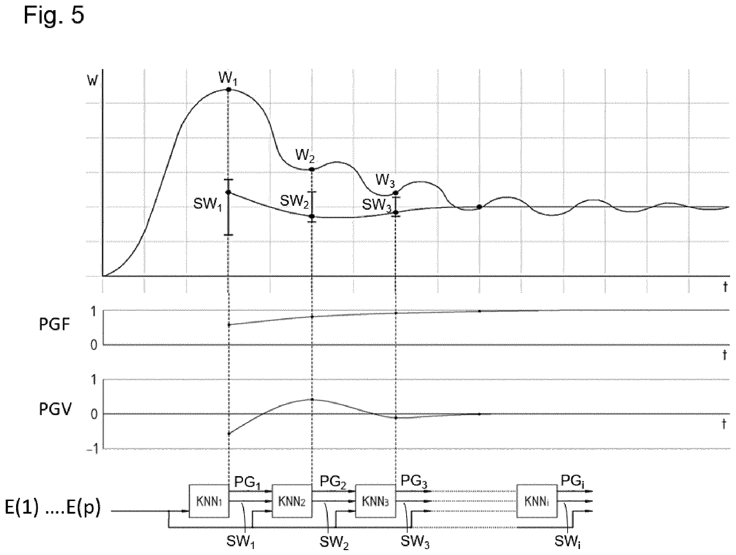

Fig. 5 zeigt eine zweite Ausführungsform der vorliegenden Erfindung, hierbei erfolgt die Werteerfassung innerhalb eines mehrstufigen künstlichen neuronalen Netzwerks KNN. Hier sind mehrere künstliche neuronale Netzwerke KNN1, KNN2, KNN3 ...KNNi hintereinandergeschaltet. Als Eingangswerte werden wieder i Eingangswerte E(1)... E(p) entsprechend verwendet. Diese werden in das erste künstliche neuronale Netzwerk KNN1 ausgelesen. Dies ist nun eine Berechnung bei einem ersten Messwert W1, in diesem Fall dem ersten lokalen Maximum. Das erste künstliche neuronale Netzwerk KNN1 liefert eine erste Prognosegüte PG1 sowie einen ersten Schätzwert SW1 an das zweite künstliche neuronale Netzwerk KNN2. Auch die Eingangswerte E1... E(p) werden an das zweite künstliche neuronale Netzwerk KNN2 geliefert. Bei einem nächsten Messpunkt W2 erfolgt eine zweite Berechnung. Diese berücksichtigt nicht nur die Eingangswerte E(1)....E(p), sondern auch die Prognosegenauigkeit PG1 des ersten künstlichen neuronalen Netzwerks KNN1 sowie dessen Schätzwert SW1. Das zweite künstliche neuronale Netzwerk KNN2 gibt somit eine zweite Prognosegenauigkeit PG2 und einen zweiten Schätzwert SW2 aus. Diese werden an das dritte künstliche neuronale Netzwerk KNN3 weitergegeben, zusätzlich auch wieder die Eingangswerte E(1)... E(p). Das dritte künstliche neuronale Netzwerk KNN3 berechnet eine dritte Prognosegenauigkeit PG3 sowie einen dritten Schätzwert SW3. Die Prognosegenauigkeit wird immer besser, dies zeigt auch die geringere Streuung vom SW1 bis hin zum SW3. Das dritte künstliche neuronale Netzwerk KNN3 nimmt die Berechnung an einem dritten Messpunkt W3 vor. Dies wiederholt sich bis zu einem i-ten künstlichen neuronalen Netzwerk KNNi, bis schlussendlich ein finaler Schätzwert SWi sowie eine finale Prognosegenauigkeit PGi ausgegeben wird. Das zu erwartende Vertrauen zu der Genauigkeit der Schätzung PG(i-1) des vorherigen künstlichen neuronalen Netzwerks KNN(i-1) kann anhand des Schätzwertes SW(i-1) der Vorgängerstufe besser trainiert werden, die Güte der Prognose kann somit besser widergespiegelt werden. Methodisch erfolgt die Abschätzung der einzelnen Schätzwerte und Prognosegenauigkeiten wie folgt: Nach dem ersten künstlichen neuronalen Netzwerk KNN1 befinden sich sowohl der Schätzwert SW1 als auch die Prognosegenauigkeit PG1 im ersten Schätzbereich S1∈ (S1ₘ, S1_{M}) und PG1∈ (PG1ₘ, PG1_{M}).

Nach dem Vorliegen des Schätzwertes SW1 kann der Zeitpunkt zur Durchführung der nächsten Stufe des zweiten künstlichen neuronalen Netzwerks zur Ermittlung des nächsten relevanten Messwertes W2 ermittelt werden, wobei hier die Berechnung der zweiten Stufe der künstlichen neuronalen Netzwerke beispielsweise stattfinden kann, wenn der nächste Messwert W2 beim Wert W=(W(1)+SW(1))/2 ankommt, oder wenn die vom Signalverlauf abgedeckte Fläche den Wert A2=k x A1 mit k∈(1,n) annimmt. Es können auch weitere vom Verlauf des Signals unabhängige oder sogar abhängige Kriterien vorhanden sein.

Wenn der laufende Messwert den Punkt W2 erreicht hat, berechnet das zweite künstliche neuronale Netzwerk KNN2 einen zweiten geschätzten Schätzwert SW2 und eine zweite Prognosegenauigkeit PG2. Dabei befinden sich beide Werte in einem jeweiligen zweiten Schätzbereich S2∈ (S2ₘ, S2_{M}) und PG2∈ (PG2ₘ, PG2_{M}). Meistens ist der Schätzbereich jetzt schon enger (S2⊂ S1). Nach dem Vorliegen des zweiten Schätzwerts SW2 kann der nächste relevante Messwert W3 ermittelt werden. Danach können beliebig viele weitere Stufen nach dem gleichen Prinzip folgen. Die möglichen Bereiche der Schätzwerte SW sollten dabei immer enger werden, die Schätzwerte SW immer genauer und die Prognosegenauigkeiten PG immer besser. Eine Entscheidung zur Verwendung eines beliebigen Schätzwertes SWi als voraussichtlichen konstanten Wert WK2 kann anhand verschiedenster Vorgehensweisen getroffen werden, beispielsweise durch Berücksichtigung der Tendenz (ist eine Konvergenz oder eine Divergenz der aufeinanderfolgenden Schätzwerte SWi, SWi-1 vorhanden, oder wird das Streuband entsprechend geringer), oder es können die einzelnen Prozessgenauigkeiten PGi, PGi-1... berücksichtigt werden. Auch eine Kombination aus beiden Vorgehensweisen kann erfolgen.

Es sind in Fig. 5 jeweils die vorzeichenfreien Prognosegenauigkeiten PGF und vorzeichenbehafteten Prognosegenauigkeiten PGV gezeigt. Beide Varianten werden mit der Zeit immer besser - die vorzeichenfreien Prognosegenauigkeiten PGF nähern sich dem Wert eins an, und die vorzeichenbehafteten Prognosegenauigkeiten PGV nähern sich dem Wert null an.

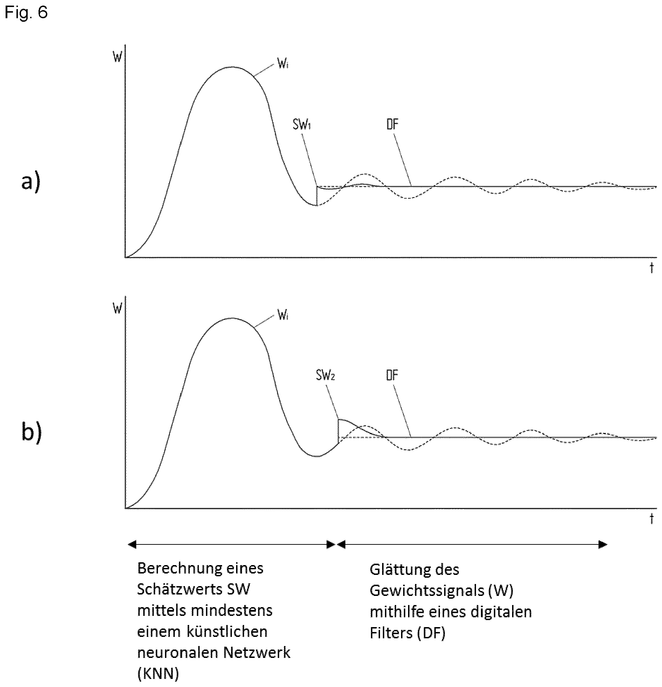

In Fig. 6 ist eine dritte Ausführungsform der vorliegenden Erfindung gezeigt, wobei eine Signalverarbeitung mittels einem Verfahren gemäß der ersten oder zweiten Ausführungsform verwendet wird, d.h. die Filterung mit einem oder mehreren künstlichen neuronalen Netzwerken. Diese geben einen Schätzwert SW für den zweiten konstanten Wert WK2 aus. Dieser Schätzwert wird als Ausgangswert für einen Digitalfilter DF gesetzt, welches das Gewichtssignal W als Eingangssignal hat und das zeitliche Geschehen des Messsignals verfolgt. Dafür werden die internen Zwischenparameter des digitalen Filters DF werden so berechnet, dass der Ausgang des digitalen Filters DF dem Wert SW entspricht, also dem Schätzwert der Berechnung des künstlichen neuronalen Netzwerks oder eben mehrerer künstlicher neuronaler Netzwerke. Bei entsprechend gesetzten Parametern des digitalen Filters DF (beispielsweise Ordnung, Eckfrequenz ...) werden die Störgrößen aus dem Messsignal herausgefiltert und die Schwankungen des Messsignals geglättet. In Fig.6 a) erfolgt der Umstieg auf ein Digitalfilter DF mit einem sehr guten Schätzwert SW1, welcher dem eigentlichen Gewichtswert entspricht. Die Schwankungen im Messsinal (gestrichelt dargestellt) werden vom Digitalfilter DF unterdrückt. Auch bei anfänglich leicht falschem Schätzwert SW wird dieser durch das digitale Filter DF mit den echten Eingangswerten hin zu den richtigen Werten korrigiert. Ein entsprechendes Stillstandskriterium SSK wertet die Dynamik des Ausgangssignals des digitalen Filters DF entsprechend einer vorgegebenen Regel aus. Zum Beispiel dürfen Änderungen des Wertes kleiner werden als ein gewisser Betrag, und dann wird die Verwendung des gefilterten Signals für die Steuerung freigegeben - dann wird ein Gewichtssignal als konstant angenommen und für die Waagensteuerung verwendet.

In Fig. 6 b) ist ein schlechterer Schätzwert SW2 gezeigt. Hier wird deutlich, dass es länger dauert, bis sich dieser an den zweiten konstanten Wert WK2 annähert.

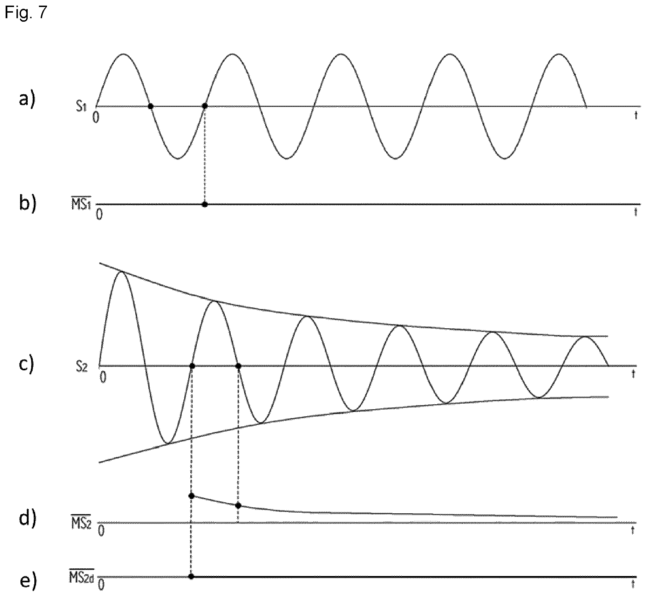

In Fig. 7 ist eine vierte Ausführungsform der vorliegenden Erfindung gezeigt. Hier wird der Verlauf der Signale S1 und S2 auf die beinhalteten Frequenzen hin untersucht, hier mittels Fourier-Analyse. In Fig. 7 a) werden die Perioden der niederfrequenten Signalanteile f1, f2 (hier nicht explizit beschriftet).berechnet und ein Mittelwert über eine gesamte Periode der niedrigsten berechnet. Dabei wird der Einfluss dieser Frequenz f1 bei gleich bleibender Amplitude, vollständig eliminiert, also subtrahiert. Wenn der Einfluss der ersten beiden niedrigen Frequenzen eliminiert werden soll, muss über eine Zeit gemittelt werden, die dem kleinsten gemeinsamen Vielfachen der ersten beiden Perioden entspricht. Dabei wird der Einfluss der Frequenzen f1 und f2, bei gleichbleibender Amplitude, vollständig eliminiert (Fig. 7 b))..

Wenn die Signalanteile gedämpft abklingen (Fig. 7 c)), wird der Mittelwert einen Restanteil der beinhalten, welcher das Abklingen der Amplitude wiederspiegelt (Fig. 7 d)). Bei bekanntem Dämpfungsfaktor, kann dann die Mittelwertbildung das Abklingen der Amplituden entsprechend berücksichtigen und so eine vollständige Tilgung des Einflusses der Signalanteile erreichen (Fig. 7 e)).

Der Dämpfungsfaktor kann entweder aus dem Signalverlauf selber berechnet werden oder er ist systemspezifisch und bekannt, da jedes mechanische System eine Eigenfrequenz aufweist.

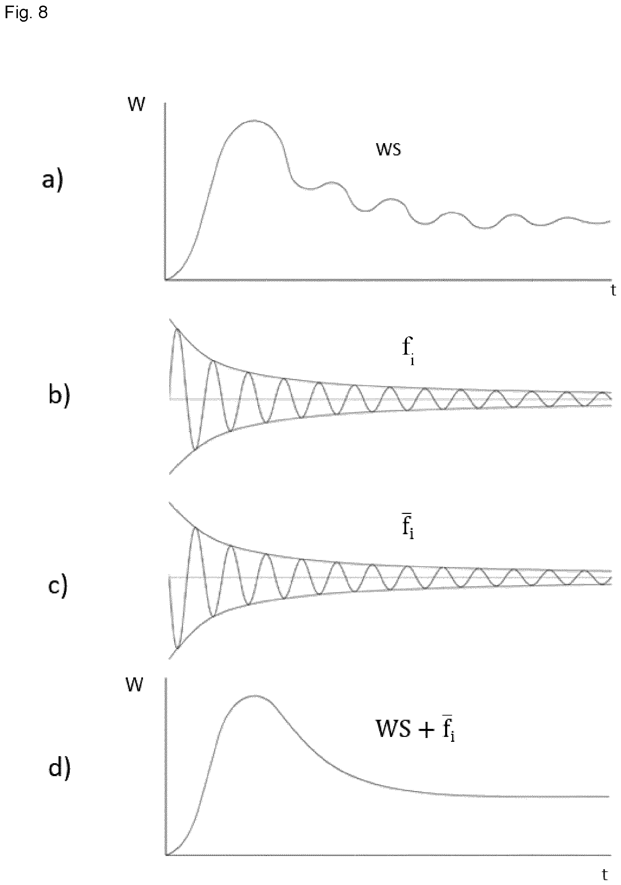

In Fig. 8 ist eine fünfte Ausführungsform der vorliegenden Erfindung gezeigt. Hier ist in Fig. 7 a) ein mit Störgrößen behaftetes Gewichtssignal WS dargestellt. Entsprechende Störfrequenzen sollen herausgefiltert werden. Hier wird zuerst der Verlauf des Signals auf die beinhaltenden Frequenzen hin untersucht, beispielsweise mit Hilfe einer Fourier-Analyse. Daraus können dann die Störfrequenz f₁, sowie deren momentane Amplituden und die Phasenlagen ermittelt werden (Fig. 7 b)). Nach einer gewissen Anzahl von Messungen, d.h. eine Messung über mehrere Schwingungen hinweg, kann der Verlauf dieser Messgrößen dazu verwendet werden, um eine Dämpfung der jeweiligen Frequenz zu berechnen. Danach kann, parallel zur weiteren Erfassung des Gewichtssignals, ein gegenphasiges Kompensationssignal *̅f̅*̅₁̅ bestimmt werden (Fig. 7 c)). Daraus kann ein nachbearbeitetes Gewichtssignal W berechnet werden, bei dem das gegenphasige Kompensationssignal *̅f̅*̅₁̅ zu dem Gewichtssignal WS addiert wird (Fig. 7 d)). Die Störgröße kann so beseitigt werden. Daraus wird dann ein bereinigtes Gewichtssignal W erhalten. Die berechnete Dämpfung kann dabei laufend aus den Messsignalen neu berechnet werden, um Amplituden der Kompensationssignale zu korrigieren. Das Messsignal wird daher von einer oder mehreren Störfrequenzen befreit, das Gewichtssignal W wird daher annähernd vollständig von den dynamischen Anteilen der Störfrequenzen befreit und damit wesentlich ruhiger. Dieses Gewichtssignal W wird dann als Eingangswert für die Berechnung des Schätzwerts mit mindestens einem künstlichen neuronalen Netzwerk gemäß einer der vorherigen Ausführungsformen verwendet. Ein Stillstandskriterium kann früher als beim eigentlichen Gewichtssignal einen gültigen und richtigen Wert erkennen, und die Zeit des Wiegevorgangs wird kürzer. In einer Mehrkopfwaage kann dies zu einer höheren Leistung oder zu besseren Kombinationsmöglichkeiten wegen einer größeren Anzahl der für eine Kombination zur Verfügung stehender Wägeeinrichtungen führen.

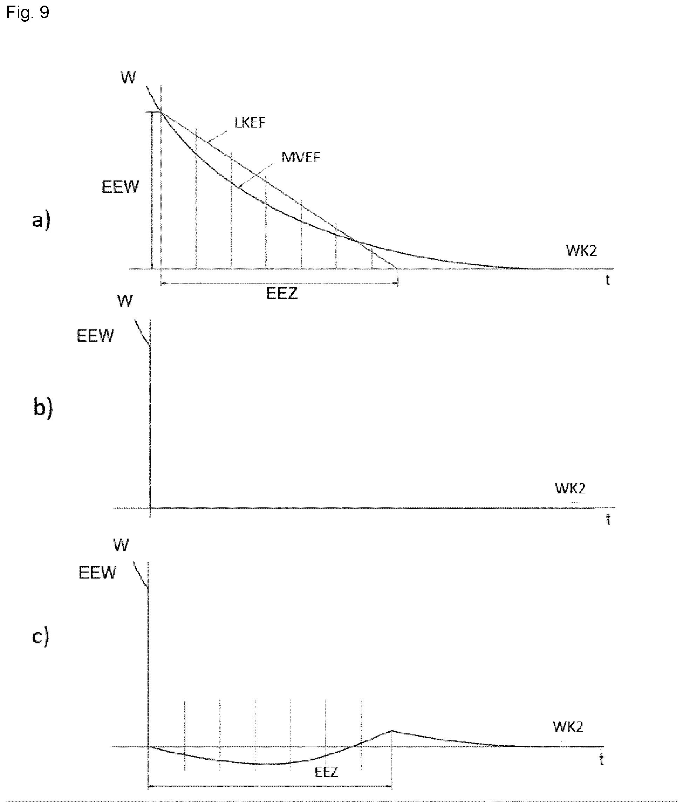

Fig. 9 zeigt eine sechste Ausführungsform gemäß der vorliegenden Erfindung, es wird hier ein Messvorgang gemäß einer der vorhergehenden Ausführungsformen durchgeführt. Jedoch kann hier eine lernfähige Korrektur des gefilterten Messsignals vorgenommen werden, um einen Erfassungsfehler entsprechend zu kompensieren. Auch in diesem Fall ermittelt ein Stillstandskriterium SSK den Zeitpunkt, an welchem das Gewichtssignal W als gültig betrachtet werden kann.

In Fig. 9 a) ist gezeigt, dass ein erster als gültig angesehener Wert, also erster Erfassungswert EEW, noch nicht gleich mit dem zweiten konstanten Wert WK2 ist und der zeitliche Verlauf des Gewichtssignals W sich noch ändern wird, bis es den zweiten konstanten Wert WK2 erreicht. Der erste Erfassungswert EEW sowie der zeitliche Verlauf des Gewichtssignals W werden hier in dieser Ausführungsform abgespeichert. Über mehrere Messungen hinweg wird ein mittlerer Verlauf des Erfassungsfehlers MVEF gebildet, bis ein statischer Endwert erreicht wird. Bei jeder anstehenden Messung wird dann ab dem Vorliegen des ersten Erfassungswertes EEW ein dem zeitlichen Verlauf entsprechender Wert abgezogen und somit entsprechend korrigiert. Dies ist in Fig. 9 b) gezeigt - hier ist der Erfassungsfehler MVEF ab dem Erfassungswert EEW vom Gewichtssignal abgezogen.

Der unkorrigierte Verlauf des Gewichtssignals W geht wiederum in die laufende Berechnung des Erfassungsfehlers MVEF ein. Durch das ständige neue Berechnen des Erfassungsfehlers MVEF passt sich dieser dem aktuellen Verhalten der Messanordnung und auch entsprechend den Messbedingungen an. Hier können auch Umwelteinflüsse herangezogen werden, wie beispielsweise Temperatur, Luftfeuchtigkeit, Sonneneinstrahlung oder ähnliches. Die Korrektur und das Verhalten der Signalverarbeitung sind daher lernfähig bzw. adaptiv. Aus dem Verlauf des Erfassungsfehlers MVEF kann eine Korrekturformel errechnet werden, und diese für die Korrektur verwendet werden (beispielsweise eine linear abfallende Korrektur LKEF, beginnend mit dem Erfassungswert EEW über eine Zeitspanne von EEZ, wie in Fig. 9 c) dargestellt. Auch bei einer einfachen, linearen Korrektur ist der korrigierte Werteverlauf deutlich genauer als der unkorrigierte, insbesondere in der ersten Zeitspanne nach der Ersterfassung.

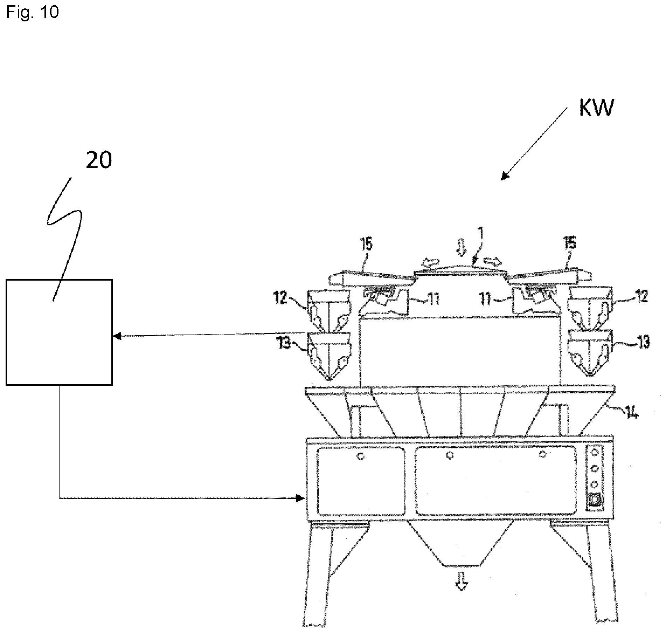

Fig. 10 zeigt eine Kombinationswaage KW, auf welcher ein erfindungsgemäßes Verfahren ausgeführt werden kann. Die Kombinationswaage besteht aus einem Verteilteller 1, auf welchem Produkte abgeworfen werden. Dieser verteilt es an Dosierrinnen 15, welche jeweils mit einem Antrieb 11 versehen sind. Das Produkt fällt aus den Dosierrinnen in verschiedene Vorratsbehälter 12 und dann in der Wägeeinrichtung 13.

Die einzelnen Wägeeinrichtungen 13 können die darin enthaltenen Produkte wiegen und daraus eine Kombination bilden - wenn beispielsweise 100 g Produkt verpackt werden sollen, öffnen sich bestimmte Wägeeinrichtungen, so dass dann ein Produktgewicht, das möglichst nahe der 100 g ist, abgeworfen werden kann.

Wenn sich diese Wägeeinrichtungen 13 öffnen, werden die Produkte in einen Sammeltrichter 14 abgeworfen, von wo sie dann einer Verpackungseinheit (hier nicht gezeigt) zugeführt werden können. An einer Wägeeinrichtung 13 ist beispielhaft die Signalverarbeitung gezeigt. Hier geht ein Wägesignal in eine Steuerungseinrichtung 20, welche entsprechend ein Signalverarbeitungsverfahren gemäß der vorliegenden Erfindung durchführt. Dieses erzeugt einen Schätzwert SW für das Gewichtssignal der einzelnen Wägeeinrichtungen 13. Diese Schätzwerte SW werden von der Steuerungseinrichtung 20 für die Kombinationsfindung verwendet, und es wird das Öffnen der einzelnen Wägeeinrichtungen 13 gesteuert, sobald eine Kombination gefunden werden konnte.

Die Erfindung ist nicht auf die beschriebenen Ausführungsformen beschränkt. Es können für das/die künstliches/n neuronale(n) Netzwerk(e) weitere Eingangs- und Ausgangswerte verwendet werden. Auch können andere Möglichkeiten für die Bestimmung der Vorverarbeitung des Gewichtssignals verwendet werden.

Es soll auch festgehalten werden, dass alle Ausführungsformen der vorliegenden Erfindung beliebig miteinander kombiniert werden können.

Die vorliegende Erfindung betrifft ein Signalverarbeitungsverfahren für Gewichtssignale W von Waagen, insbesondere Kombinationswaagen K.

Die Signalverarbeitung erfolgt anhand von vorverarbeiteten diskreten Werten W(i) des Gewichtssignals W, welche an mindestens ein künstliches neuronales Netzwerk geliefert werden. Mithilfe diesem mindestens einen künstlichen neuronalen Netzwerk wird ein Schätzwerte SW für das tatsächliche Gewichts, beispielsweise in einer Wägeeinrichtung einer Kombinationswaage, ermittelt. Dies geschieht schneller, als wenn auf das tatsächliche Gewichtssignal gewartet würde. Die Schätzwerte SW werden an die Kombinationswaage KW weitergegeben, welche diese für Kombinationsbildungen verwendet.

## Patentansprüche

1. Signalverarbeitungsverfahren zur Verarbeitung eines Gewichtssignals einer Wägeeinrichtung, umfassend die folgenden Schritte:
a) wiederholtes Abtasten eines Gewichtssignals (W) zwischen einem ersten konstanten Wert (WK1) und einem zweiten konstanten Wert (WK2) mit einem Abtastintervall (Δt) wobei i diskrete Werte (W(i)) erhalten werden;
b) Vorverarbeitung des Gewichtssignals (W), Ermitteln und Ausgabe von resultierenden Kenngrößen (RK(i)),
c) Liefern von mindestens zwei, maximal i resultierenden Kenngrößen (RK(i)) an jeweilige Eingänge (E(p)) mindestens eines künstlichen neuronalen Netzwerks (KNN(1)) als Eingangswerte, Verarbeiten der Eingangswerte (RK(i)) in mindestens einer Innenlayer (H(m,n)),
d) Ausgabe von Ausgangswerten (A(q)) aus einer Ausgangslayer (O(q)), wobei ein Ausgangswert (A(1)) ein Schätzwert (SW) für den zweiten konstanten Wert (WK2) ist,
wobei Eingangslayer (I(i)), die mindestens eine Innenlayer (H(i)) und Ausgangslayer (O(i)) jeweils Neuronen aufweisen, welche über gewichtete Verknüpfungen (w(m,n)) mit den Neuronen der gleichen oder jeweiligen vor- und/oder nachfolgenden Layer verbunden sind.

2. Signalverarbeitungsverfahren gemäß Anspruch 1, wobei die resultierenden Kenngrößen in Schritt b) ausgewählt sind aus Maxima (Max(i)) und Minima (Min(i)) und dazugehörigen Zeitpunkten (t(i)), die vom Signalverlauf abgedeckten Flächen AR(i) zu bestimmten Zeitpunkten (t(i)), Steigungen m(i) oder Krümmungen (K(i)) zu bestimmten Zeitpunkten (t(i)), sowie Temperatur, Druck, Luftfeuchtigkeit, Uhrzeit, Sonneneinstrahlung, EMV-Kenngrößen, sowie Kenngrößen zu Produkteigenschaften wie Dichte, Hafteigenschaften, Feuchtegrad.

3. Signalverarbeitungsverfahren gemäß einem der vorhergehenden Ansprüche, wobei in Schritt d) weiterhin eine Prognosegenauigkeit (PG) als ein weiterer Ausgangswert (A(2)) ausgegeben wird.

4. Signalverarbeitungsverfahren gemäß einem der vorhergehenden Ansprüche, weiterhin die Schritte d1) und d2) aufweisend:
d1) Prüfen, ob die Prognosegenauigkeit (PG) innerhalb eines vorbestimmten Wertebereiches liegt und ein vorbestimmtes Stillstandskriterium (SSK) erreicht ist;
d2) wenn die Prognosegenauigkeit (PG) innerhalb eines vorbestimmten Wertebereiches liegt, Übernehmen des Schätzwerts (SW); wenn die Prognosegenauigkeit nicht innerhalb des vorbestimmten Wertebereichs liegt, Verabeitung weiterer Gewichtswerte bis zum Erreichen eines gültigen Wertes oder Anpassung des Stillstandskriteriums (SSK) und Wiederholen der Schritte a) bis d1).

5. Signalverarbeitungsverfahren gemäß einem der Ansprüche 1-4, wobei i künstliche neuronale Netzwerke (KNN(i)) hintereinander zum Einsatz kommen, wobei i größer als 1 ist, umfassend die folgenden weiteren Schritte:
e) Einlesen der Eingangswerte (RK(i)) sowie von Ausgangswerten (A(i-1, q)) des jeweils vorherigen künstlichen neuronalen Netzwerks (KNN (i-1)), wobei ein Ausgangswert (A(i-1, 1)) der Schätzwert (SW) für den zweiten konstanten Wert (WK2) ist und ein weiterer Ausgangswert (A(i-1,2)) die Prognosegenauigkeit (PG) des jeweils vorherigen künstlichen neuronalen Netzwerks (KNN (i-1)) ist, in ein weiteres künstliches neuronales Netzwerk (KNN(i));
f) Berechnen von Ausgangswerten (A(i,q)) des aktuellen künstlichen neuronalen Netzwerks (KNN (i)), wobei ein Ausgangswert (A(i,1)) der Schätzwert (SW1) für den zweiten konstanten Wert (WK2) ist und ein weiterer Ausgangswert (A(i,2)) die Prognosegenauigkeit (PG1) des aktuellen künstlichen neuronalen Netzwerks (KNN (i)) ist;
g) (i-1)-faches Wiederholen der Schritte e) und f),
h) Ausgabe der finalen Ausgangswerte (A(q,i)), wobei mindestens ein finaler Schätzwert (SW(i)) sowie eine finale Prognosegenauigkeit (PG(i)) ausgegeben werden.

6. Signalverarbeitungsverfahren gemäß Anspruch 5, wobei die Entscheidung zur Verwendung des Schätzwerts (SW) als zweiten konstanten Wert (WK2) in Abhängigkeit der Tendenz, beispielsweise Konvergenz, Divergenz oder Streuband, der aufeinanderfolgenden Schätzwerte (SW(i)) oder in Abhängigkeit der Prognosegenauigkeiten (PG(i)) oder einer Kombination aus beiden erfolgt.

7. Signalverarbeitungsverfahren gemäß einem der Ansprüche 1 bis 6, wobei der Schätzwert (SW), des mindestens einen künstlichen neuronalen Netzwerks (KNN(i)) an ein Digitalfilter (DF) geliefert wird, welches das aktuelle Gewichtssignal (W) als Eingangssignal hat und ausgehend von diesem Wert ab diesem Zeitpunkt das zeitliche Geschehen des Gewichtssignals (W) verfolgt

8. Signalverarbeitungsverfahren gemäß einem der Ansprüche 1 bis 7, wobei eine Vorverarbeitung des Gewichtssignals (W) in Schritt b) durch eine Fourier-Analyse des Gewichtssignals (W) erfolgt, wobei mindestens eine Störfrequenz (SF) sowie deren momentane Amplituden (AS) sowie deren Phasenlagen (PF) ermittelt werden, und daraus ein gegenphasiges Kompensationssignal (SK) ermittelt wird, welches zu dem Gewichtssignal (W) addiert wird, um ein korrigiertes Gewichtssignal (WKORR) zu erhalten, wobei vorzugsweise laufend eine Dämpfung (D) aus dem Gewichtssignal (W) ermittelt wird, um die Amplituden (AK) des Kompensationssignale (SK) zu korrigieren, wobei aus dem korrigierten Gewichtssignal (WKORR) die resultierenden Kenngrößen (RK(i)) ermittelt werden.

9. Signalverarbeitungsverfahren gemäß Anspruch 7 oder 8, wobei die Störfrequenzen durch einen weiteren Sensor (SE), gesondert von der tatsächlichen Messgröße ermittelt werden.

10. Signalverarbeitungsverfahren gemäß einem der Ansprüche 1 bis 9, wobei die Differenz eines Schätzwertes (SW) und des Gewichtssignals (W) ermittelt wird, daraus ein Korrekturfaktor (KORR) über die Zeit ermittelt wird, und dieser in folgenden Messungen vom Gewichtssignal (W) abgezogen wird, um ein korrigiertes Gewichtssignal (WKORR) zu erhalten.

11. Signalverarbeitungsverfahren gemäß Anspruch 10, wobei der Korrekturfaktor (KORR) aus einem vom Messvorgang unabhängigen, festgelegten Größenverlauf von Gewichtssignalen berechnet wird.

12. Signalverarbeitungsverfahren gemäß einem der Ansprüche 1 bis 11, wobei verschiedene Varianten der Signalverarbeitungsverfahren parallel berechnet werden und deren Resultate durch eine geeignete Methode der Mittelwertbildung in einen Mittelwert des Schätzwerts (SW) für den zweiten konstanten Wert (WK2) zusammengeführt werden.

13. Signalverarbeitungsverfahren gemäß einem der Ansprüche 4 bis 12, wobei für das Stillstandskriterium (SSK) für das Gewichtssignal (W) zwei aufeinanderfolgende Gewichtswerte (W(i), W(i-1)) verglichen werden, und wenn deren Differenz kleiner ist als ein vorgegebener Wert (DIFF), ein Zähler (Z) inkrementell erhöht wird, und wenn deren Differenz größer ist als ein vorgegebener Wert (DIFF), ein Zähler (Z) inkrementell verringert wird, und wenn der Zähler (Z) eine bestimmte Vorgabe (ZV) erreicht, das Stillstandskriterium (SSK) als erfüllt gilt, wobei vorzugsweise das Hochzählen des Zählers (Z) mit einem vorgegebenen Inkrement (IN) und das Herunterzählen mit einem vorgegebenen Dekrement (DE) erfolgt.

14. Signalverarbeitungsverfahren gemäß einem der Ansprüche 4 bis 12, wobei für das Stillstandskriterium (SSK) für das Gewichtssignal (W) zwei aufeinanderfolgende Gewichtswerte (W(i-1), W(i)) verglichen werden, und wenn deren Differenz kleiner ist als ein vorgegebener Wert (DIFF), ein Zähler (Z) inkrementell erhöht wird, und wenn deren Differenz größer ist als ein vorgegebener Wert (DIFF), der Zähler (Z) auf Null gesetzt wird, und wenn der Zähler (Z) eine bestimmte Vorgabe (ZV) erreicht, das Stillstandskriterium (SSK) als erfüllt gilt.

15. Kombinationswaage (KW), aufweisend:
einen Verteilteller (1) sowie mehrere Dosierrinnen (15), welche jeweils mit einem Antrieb (11) versehen sind,
sowie mindestens eine Wägeeinrichtung (13) und optional Vorratsbehälter (12), welche(r) jeweils unter dem Ende einer Dosierrinne (15) angeordnet sind,
sowie einen Sammeltrichter (14), der dazu angepasst ist, Produkte aus den Wägeeinrichtungen (13) aufzunehmen,
wobei die Wägeeinrichtungen (13) dazu angepasst sind, ein Gewichtssignal (W) über die Zeit (t) aufzunehmen,
wobei die Kombinationswaage (KW) ferner eine Steuerungsvorrichtung (20) aufweist, die dazu angepasst ist, für mindestens eine Wägeeinrichtung (13) ein Signalverarbeitungsverfahren gemäß einem der Ansprüche 1 bis 15 auszuführen, um Schätzwerte (SW) für das Gewichtssignal (W) der Wägeeinrichtung(en) (13) zu ermitteln, daraus Kombinationen zu ermitteln und den Abwurf von Produkt aus der Wägeeinrichtung(en) (13) zu steuern.

## Claims

1. A signal processing method for processing a weight signal of a weighing device, comprising the following steps:
a) Repeatedly sampling a weight signal (W) between a first constant value (WK1) and a second constant value (WK2) with a sampling interval (Δt), wherein i discrete values (W(i)) are obtained;
b) Preprocessing of the weight signal (W), determination and output of resulting characteristics (RK(i)),
c) Providing at least two, at most i resulting characteristics (RK(i)) to respective inputs (E(p)) of at least one artificial neural network (KNN(1)) as input values, processing the input values (RK(i)) in at least one inner layer (H(m,n)),
d) Outputting of output values (A(q)) from an output layer (O(q)), wherein an output value (A(1)) is an estimated value (SW) for the second constant value (WK2),
wherein input layers (I(i)), the at least one inner layer (H(i)) and output layers (O(i)) each comprise neurons which are connected via weighted connections (w(m,n)) to the neurons of the same or respective preceding and/or succeeding layers.

2. Signal processing method according to claim 1, wherein the resulting characteristic quantities in step b) are selected from maxima (Max(i)) and minima (Min(i)) and associated points in time (t(i)), the areas AR(i) covered by the signal course at specific points in time (t(i)), slopes m(i) or curvatures K(i) at certain points in time (t(i)), as well as temperature, pressure, humidity, time, solar radiation, EMC characteristics, and characteristics of product properties such as density, adhesion properties, degree of moisture.

3. Signal processing method according to any one of the preceding claims, wherein in step d) a prediction accuracy (PG) is further output as a further output value (A(2)).

4. Signal processing method according to any one of the preceding claims, further comprising the steps d1) and d2):
d1) Checking whether the prediction accuracy (PG) is within a predetermined value range and a predetermined standstill criterion (SSK) has been reached;
d2) if the prediction accuracy (PG) is within a predetermined value range, accepting the estimated value (SW); if the prediction accuracy is not within the predetermined value range, processing further weight values until a valid value is reached, or adjusting the stability criterion (SSK) and repeat steps a) to d1).

5. Signal processing method according to any one of claims 1-4, wherein i artificial neural networks (KNN(i)) are used in series, where i is greater than 1, comprising the following further steps:
e) Reading in the input values (RK(i)) as well as output values (A(i-1, q)) of the respective previous artificial neural network (KNN (i-1)) into a further artificial neural network (KNN(i)), wherein one output value (A(i-1, 1)) is the estimated value (SW) for the second constant value (WK2), and a further output value (A(i-1,2)) is the prediction accuracy (PG) of the respective previous artificial neural network (KNN (i-1));
f) Calculating output values (A(i,q)) of the current artificial neural network (KNN (i)), wherein one output value (A(i,1)) is the estimated value (SW1) for the second constant value (WK2), and another output value (A(i,2)) is the prediction accuracy (PG1) of the current artificial neural network (KNN (i));
g) (i-1)-fold repetition of steps e) and f),
h) Outputting of the final output values A(q, i), where at least a final estimated value (SW(i)) and a final prediction accuracy (PG(i)) are output.

6. Signal processing method according to claim 5, wherein the decision to use the estimated value (SW) as the second constant value (WK2) is made in dependence on the tendency, for example convergence, divergence or scatter band of the successive estimated values SW(i) or in dependence on the prediction accuracies PG(i) or a combination of both.

7. Signal processing method according to any one of claims 1 to 6, wherein the estimated value (SW) of the at least one artificial neural network (KNN(i)) is supplied to a digital filter (DF), which has the current weight signal (W) as input signal and, starting from this value, tracks the temporal course of the weight signal (W) from this moment onwards

8. Signal processing method according to any one of claims 1 to 7, wherein a preprocessing of the weight signal (W) is carried out in step b) by a Fourier analysis of the weight signal (W), wherein at least one interference frequency (SF) as well as its instantaneous amplitudes (AS) as well as its phase positions (PF) are determined, and a counter-phase compensation signal (SK) is determined therefrom, which is added to the weight signal (W) in order to obtain a corrected weight signal (WKORR), wherein preferably a damping (D) is continuously determined from the weight signal (W) in order to correct the amplitudes (AK) of the compensation signal (SK),
wherein the resulting characteristics RK(i) are determined from the corrected weight signal (WKORR).

9. Signal processing method according to claim 7 or 8, wherein the interference frequencies are determined by a further sensor (SE), separately from the actual measured quantity.

10. Signal processing method according to any one of claims 1 to 9, wherein the difference of an estimated value (SW) and the weight signal (W) is determined, a correction factor (KORR) over time is determined therefrom, and this is subtracted from the weight signal (W) in subsequent measurements to obtain a corrected weight signal (WKORR).

11. Signal processing method according to claim 10, wherein the correction factor (KORR) is calculated from a fixed magnitude curve of weight signals independent of the measurement process.

12. Signal processing method according to any one of claims 1 to 11, wherein different variants of the signal processing methods are calculated in parallel and their results are merged into an average value of the estimated value (SW) for the second constant value (WK2) by a suitable averaging method.

13. A signal processing method according to any one of claims 4 to 12, wherein two successive weight values (W(i), W(i-1)) are compared for the standstill criterion (SSK) for the weight signal (W), and if their difference is smaller than a predetermined value (DIFF), a counter (Z) is incremented, and if their difference is greater than a predetermined value (DIFF), a counter (Z) is incrementally decreased, and if the counter (Z) reaches a specific preset requirement (ZV), the standstill criterion (SSK) is considered to be fulfilled, the counting up of the counter (Z) preferably taking place with a predetermined increment (IN) and the counting down taking place with a predetermined decrement (DE).

14. A signal processing method according to any one of claims 4 to 12, wherein two successive weight values (W(i-1), W(i)) are compared for the standstill criterion (SSK) for the weight signal (W), and if their difference is smaller than a predetermined value (DIFF), a counter (Z) is incremented, and if their difference is greater than a predetermined value (DIFF), the counter (Z) is set to zero, and if the counter (Z) reaches a certain preset (ZV), the standstill criterion (SSK) is considered to be fulfilled.

15. Combination scale (KW), comprising:
a distribution plate (1) and several dosing chutes (15), each of which is provided with a drive (11),
as well as at least one weighing device (13) and optionally storage container(s) (12), each of which is/are arranged below the end of a dosing chutes (15),
and a collection chute (14) adapted to receive products from the weighing devices (13),
wherein the weighing means (13) are adapted to record a weight signal (W) over time (t),
wherein the combination scale (KW) further comprises a control device (20) adapted to perform, for at least one weighing device (13), a signal processing method according to any one of claims 1 to 15 for determining estimated values (SW) for the weight signal (W) of the weighing device(s) (13), determining combinations therefrom and controlling the discharge of product from the weighing device(s) (13).

## Revendications

1. Procédé de traitement de signaux pour traiter un signal de poids d'un dispositif de pesage, comprenant les étapes suivantes :
a) échantillonner de manière répétée un signal de poids (W) entre une première valeur constante (WK1) et une seconde valeur constante (WK2) avec un intervalle d'échantillonnage (Δt), dans lequel i valeurs discrètes (W(i)) sont obtenues ;
b) prétraiter le signal de poids (W), déterminer et sortir les caractéristiques résultantes (RK(i)),
c) disposer d'au moins deux, au plus i quantités caractéristiques résultantes (RK(i)) aux entrées respectives (E(p)) d'au moins un réseau neuronal artificiel (KNN(1)) comme valeurs d'entrée, traiter les valeurs d'entrée (RK(i)) dans au moins une couche interne (H(m,n)),
d) sortir des valeurs de sortie (A(q)) d'une couche de sortie (O(q)), une valeur de sortie (A(1)) étant une valeur estimée (SW) pour la seconde valeur constante (WK2),
dans lequel les couches d'entrée (I(i)), la au moins une couche interne (H(i)) et la couche de sortie (O(i)) comprennent chacune des neurones qui sont connectées via des connexions pondérées (w(m,n)) aux neurones de la même couche ou des couches précédentes et/ou suivantes respectives.

2. Procédé de traitement de signaux selon la revendication 1, dans lequel les quantités caractéristiques résultantes à l'étape b) sont choisies parmi des maxima (Max(i)) et des minima (Min(i)) et des instants associés (t(i)), des zones AR(i) couvertes par le parcours du signal à des instants spécifiques (t(i)), des pentes m(i) ou des courbures (K(i)) à des instants spécifiques (t(i)), ainsi que de la température, de la pression, de l'humidité, de l'heure, du rayonnement solaire, des caractéristiques CEM et des caractéristiques des propriétés du produit telles que la densité, les propriétés d'adhésion, le degré d'humidité.

3. Procédé de traitement de signaux selon l'une quelconque des revendications précédentes, dans lequel, à l'étape d), une précision de prédiction (PG) est en outre sortie en tant que valeur de sortie supplémentaire (A(2)).

4. Procédé de traitement de signaux selon l'une quelconque des revendications précédentes, comprenant en outre les étapes d1) et d2) :
d1) vérifier si la précision de prédiction (PG) se situe dans une plage de valeurs prédéterminée et si un critère d'arrêt prédéterminé (SSK) a été atteint ;
d2) si la précision de prédiction (PG) est dans une plage de valeurs prédéterminée, accepter la valeur estimée (SW) ; et si la précision de prédiction n'est pas dans la plage de valeurs prédéterminée, traiter d'autres valeurs de poids jusqu'à ce qu'une valeur valide soit atteinte, ou ajuster le critère de stabilité (SSK) et répéter les étapes a) à d1).

5. Procédé de traitement de signaux selon l'une quelconque des revendications 1 à 4, dans lequel i réseaux neuronaux artificiels (KNN(i)) sont utilisés sériellement, i étant plus grand que 1, comprenant les étapes additionnelles suivantes :
e) lire les valeurs d'entrée (RK(i)) ainsi que les valeurs de sortie (A(i-1, q)) du réseau neuronal artificiel précédent respectif (KNN (i-1)) dans un autre réseau neuronal artificiel (KNN(i)), une valeur de sortie (A(i-1, 1)) étant la valeur estimée (SW) pour la seconde valeur constante (WK2), et une autre valeur de sortie (A(i-1, 2)) étant la précision de prédiction (PG) du réseau neuronal artificiel précédent respectif (KNN (i-1)) ;
f) calculer des valeurs de sortie (A(i,q)) du réseau neuronal artificiel actuel (KNN (i)), une valeur de sortie (A(i,1)) étant la valeur estimée (SW1) pour la seconde valeur constante (WK2), et une autre valeur de sortie (A(i,2)) étant la précision de prédiction (PG1) du réseau neuronal artificiel actuel (KNN (i)) ;
g) répéter (i-1)-fois les étapes e) et f),
h) sortir les valeurs de sortie finales (A(q, i)), où au moins une valeur estimée finale (SW(i)) et une précision de prédiction finale (PG(i)) sont sorties.

6. Procédé de traitement de signaux selon la revendication 5, dans lequel la décision d'utiliser la valeur estimée (SW) comme seconde valeur constante (WK2) est prise en fonction de la tendance, par exemple la convergence, la divergence ou la bande de dispersion des valeurs estimées successives (SW(i)) ou en fonction des précisions de prédiction (PG(i)) ou d'une combinaison des deux.

7. Procédé de traitement de signaux selon l'une quelconque des revendications 1 à 6, dans lequel la valeur estimée (SW) de l'au moins un réseau neuronal artificiel (KNN(i)) est fournie à un filtre numérique (DF), qui a le signal de poids actuel (W) comme signal d'entrée et, à partir de cette valeur, suit l'évolution temporelle du signal de poids (W) à partir de ce moment.

8. Procédé de traitement de signal selon l'une quelconque des revendications 1 à 7, dans lequel un prétraitement du signal de poids (W) est effectué à l'étape b) par une analyse de Fourier du signal de poids (W), dans lequel au moins une fréquence interférentielle (SF) ainsi que ses amplitudes instantanées (AS) ainsi que ses positions de phase (PF) sont déterminées, et à partir de là, un signal de compensation en contre-phase (SK) est déterminé, qui est ajouté au signal de poids (W) afin d'obtenir un signal de poids corrigé (WKORR), un amortissement (D) étant de préférence déterminé en continu à partir du signal de poids (W) afin de corriger les amplitudes (AK) du signal de compensation (SK),
dans lequel les caractéristiques résultantes (RK(i)) sont déterminées à partir du signal de poids corrigé (WKORR).

9. Procédé de traitement de signal selon la revendication 7 ou 8, dans lequel les fréquences d'interférence sont déterminées par un autre capteur (SE), séparément de la grandeur mesurée réelle.

10. Procédé de traitement de signaux selon l'une quelconque des revendications 1 à 9, dans lequel la différence entre une valeur estimée (SW) et le signal de poids (W) est déterminée, un facteur de correction (KORR) en est déduit en fonction du temps, et celui-ci est soustrait du signal de poids (W) lors de mesures ultérieures pour obtenir un signal de poids corrigé (WKORR).

11. Procédé de traitement de signaux selon la revendication 10, dans lequel le facteur de correction (KORR) est calculé à partir d'une courbe d'amplitude indépendante et fixe de signaux de poids du processus de mesure.

12. Procédé de traitement de signaux selon l'une quelconque des revendications 1 à 11, dans lequel différentes variantes des procédés de traitement de signal sont calculées en parallèle et leurs résultats sont fusionnés en une valeur moyenne de la valeur estimée (SW) pour la deuxième valeur constante (WK2) par un procédé de calcul de moyenne approprié.

13. Procédé de traitement de signaux selon l'une quelconque des revendications 4 à 12, dans lequel deux valeurs de poids successives (W(i), W(i-1)) sont comparées pour le critère d'immobilisation (SSK) pour le signal de poids (W), et si leur différence est inférieure à une valeur prédéterminée (DIFF), un compteur (Z) est incrémenté, et si leur différence est supérieure à une valeur prédéterminée (DIFF), un compteur (Z) est incrémenté, et si le compteur (Z) atteint une valeur prédéterminée spécifique (ZV), le critère d'arrêt (SSK) est considéré comme étant rempli, le comptage du compteur (Z) s'effectuant de préférence avec une incrémentation prédéterminée (IN) et le décompte s'effectuant avec une décrémentation prédéterminée (DE).

14. Procédé de traitement de signaux selon l'une quelconque des revendications 4 à 12, dans lequel deux valeurs de poids successives (W(i-1), W(i)) sont comparées pour le critère d'arrêt (SSK) pour le signal de poids (W), et si leur différence est inférieure à une valeur prédéterminée (DIFF), un compteur (Z) est incrémenté, et si leur différence est supérieure à une valeur prédéterminée (DIFF), le compteur (Z) est mis à zéro, et si le compteur (Z) atteint une valeur prédéterminée spécifique (ZV), le critère d'arrêt (SSK) est considéré comme étant rempli.

15. Balance combinée (KW), comprenant :
une plaque de distribution (1) et plusieurs rigoles de dosage (15), dont chacune est disposée avec un entraînement (11),
ainsi qu'au moins un dispositif de pesage (13) et facultativement un ou plusieurs récipients de stockage (12), qui sont disposés respectivement sous l'extrémité d'une rigole de dosage (15),
ainsi qu'une trémie de collecte (14) adaptée pour recevoir les produits provenant des dispositifs de pesage (13),
dans laquelle les dispositifs de pesage (13) sont adaptés pour enregistrer un signal de poids (W) au cours du temps (t),
dans laquelle la balance combinée (KW) comprend en outre un dispositif de commande (20) adapté pour exécuter, pour au moins un dispositif de pesage (13), un procédé de traitement de signaux selon l'une quelconque des revendications 1 à 15 pour déterminer des valeurs estimées (SW) pour le signal de poids (W) du ou des dispositifs de pesage (13), et pour déterminer des combinaisons à partir de celles-ci, et commander la décharge de produit du ou des dispositifs de pesage (13).
